# EUROPÄISCHE PATENTSCHRIFT

(11) **EP 2 948 655 B1**
(45) Veröffentlichungstag und Bekanntmachung des Hinweises auf die Patenterteilung: **15.03.2017**
(21) Anmeldenummer: 14703527.3
(22) Anmeldetag: 21.01.2014
(51) Int. Cl.: F01N 3/30, F02D 41/00, F01N 3/32, F02D 41/02, F02D 41/12, F02B 39/10

(54) **VERFAHREN ZUM BETREIBEN EINER ANTRIEBSEINRICHTUNG SOWIE ENTSPRECHENDE ANTRIEBSEINRICHTUNG**
METHOD FOR OPERATING AN ENGINE, AND CORRESPONDING ENGINE
PROCÉDÉ PERMETTANT DE FAIRE FONCTIONNER UN MOTEUR ET MOTEUR CORRESPONDANT

(30) Priorität: 23.01.2013 DE 102013001080
(43) Veröffentlichungstag der Anmeldung: 02.12.2015
(73) Patentinhaber: Audi AG, 85045 Ingolstadt (DE)
(72) Erfinder: GÖRGEN, Michael, 53925 Kall (DE); SONNER, Markus, 85110 Kipfenberg (DE)
(86) Internationale Anmeldenummer: PCT/EP2014/000147
(87) Internationale Veröffentlichungsnummer: WO 2014/114443

(56) Entgegenhaltungen:
- EP-A2- 1 013 997
- DE-A1-102004 048 335
- DE-A1-102010 060 136
- US-A1- 2003 074 891

## Beschreibung

Die Erfindung betrifft ein Verfahren zum Betreiben einer Antriebseinrichtung mit einer Brennkraftmaschine und mit einer an die Brennkraftmaschine angeschlossenen Abgasanlage, die wenigstens einen Katalysator aufweist, dem zum Aufheizen in wenigstens einem Betriebszustand der Brennkraftmaschine ein mittels einer Heizeinrichtung erwärmter Warmluftstrom zugeführt wird. Die Erfindung betrifft weiterhin eine Antriebseinrichtung.

Die Antriebseinrichtung dient beispielsweise dem Antreiben eines Kraftfahrzeugs. Die Antriebseinrichtung kann dabei Bestandteil einer Hybridantriebsvorrichtung sein, welche neben der Antriebseinrichtung über zumindest eine weitere Antriebseinrichtung verfügt, welche beispielsweise eine elektrische Maschine, insbesondere nur die elektrische Maschine, aufweist. Dabei kann es vorgesehen sein; dass die Antriebseinrichtung und die weitere Antriebseinrichtung ein auf das Antreiben des Kraftfahrzeugs gerichtetes Drehmoment wenigstens zeitweise gemeinsam erzeugen. Zu diesem Zweck sind die Antriebseinrichtung und die weitere Antriebseinrichtung beispielsweise mittels eines Getriebes miteinander wirkverbunden. Neben der Brennkraftmaschine weist die Antriebseinrichtung die Abgasanlage auf. Die Abgasanlage dient dem Ableiten des von der Brennkraftmaschine erzeugten Abgases in Richtung einer Außenumgebung der Antriebseinrichtung. Um geltende Abgasvorschriften zu erfüllen, ist es notwendig, das Abgas wenigstens teilweise zu reinigen, bevor es in die Außenumgebung gelangt. Zu diesem Zweck weist die Abgasanlage den Katalysator auf. Das Abgas der Brennkraftmaschine wird beim Durchlaufen der Abgasanlage durch den Katalysator geleitet, in welchem eine katalytisch begünstigte Reaktion, insbesondere eine Reduktion, abläuft. Nach dem Durchlaufen des Katalysators kann das Abgas von der Abgasanlage der Außenumgebung zugeführt werden.

Der Katalysator muss üblicherweise zumindest eine bestimmte Arbeitstemperatur aufweisen, damit die Reaktion abläuft und die Reinigung des Abgases durchgeführt werden kann. Das Beheizen des Katalysators erfolgt dabei zum einen durch das ihn durchströmende Abgas, welches nach der Brennkraftmaschine eine hohe Temperatur aufweist.

Insbesondere bei niedrigen Außenumgebungen und/oder einem Kaltstart der Antriebseinrichtung kann jedoch die Zeitspanne, welche bis zum Erreichen der Betriebstemperatur durch den Katalysator verstreicht, vergleichsweise lang sein. In dieser Zeitspanne kann die Reaktion nicht oder nur mit geringer Effizienz ablaufen, sodass die Reinigung des Abgases nicht zuverlässig beziehungsweise nicht vollständig erfolgt.

Diese Problematik ist bei der Hybridantriebsvorrichtung besonders ausgeprägt, weil hier die Brennkraftmaschine nicht ständig in Betrieb ist. Das bedeutet, dass in Zeitabschnitten, in welchen nur die weitere Antriebseinrichtung zum Bereitstellen eines Drehmoments betrieben wird, während die Antriebseinrichtung und mithin die Brennkraftmaschine deaktiviert ist, der Katalysator nicht durch das Abgas beheizt wird. Entsprechend verringert sich seine Temperatur. Fällt sie dabei unter die Betriebstemperatur ab, so kann bei einem erneuten Aktivieren der Antriebseinrichtung beziehungsweise der Brennkraftmaschine das dabei entstehende Abgas nicht zuverlässig gereinigt werden.

Aus diesem Grund ist die Heizeinrichtung vorgesehen, mittels welcher der Warmluftstrom erzeugt und nachfolgend zum Aufheizen des Katalysators in dem wenigstens einen Betriebszustand der Brennkraftmaschine dem Katalysator zugeführt wird. Durch das Betreiben der Heizeinrichtung kann also der Katalysator auch während Zeitabschnitten, in welchen die Brennkraftmaschine nicht betrieben wird beziehungsweise in welchen sie deaktiviert ist, auf oder über seiner Betriebstemperatur gehalten werden. Die Heizeinrichtung ist insbesondere bei als Dieselbrennkraftmaschinen ausgebildeten Brennkraftmaschinen vorgesehen. Den vorstehenden Ausführungen ist zu entnehmen, dass der Katalysator mittels der Heizeinrichtung mittelbar beheizbar ist. Das bedeutet, dass die Heizeinrichtung nicht oder zumindest nicht nur über eine Wärmeleitverbindung mit dem Katalysator in Wärmeübertragungsverbindung steht. Vielmehr wird ein Fluid zum Erzeugen des Warmluftstroms erwärmt und anschließend das Aufheizen des Katalysators mithilfe dieses Warmluftstroms vorgenommen.

Die mittels der Heizeinrichtung erzielbare Temperatur ist üblicherweise sehr hoch und liegt - zumindest unmittelbar stromabwärts der Heizeinrichtung - beispielsweise über der maximal zulässigen Temperatur des Katalysators. Aus diesem Grund kann es vorgesehen sein, die Heizeinrichtung zum Erzeugen des Warmluftstroms nur während eines Betriebs der Brennkraftmaschine zu betreiben und den Warmluftstrom stromaufwärts des Katalysators dem Abgas der Brennkraftmaschine beizumengen. Das Abgas hat üblicherweise eine Temperatur, welche niedriger ist als die des Warmluftstroms. Bei einem ausreichenden Abgasmassenstrom ist mithin die Temperatur des Fluids, welches den Katalysator durchströmt und sich aus dem Warmluftstrom und dem Abgas der Brennkraftmaschine zusammensetzt, ausreichend niedrig und entspricht vorzugsweise zumindest der Betriebstemperatur, ist jedoch kleiner als die maximal zulässige Temperatur des Katalysators.

Ist der Abgasmassenstrom jedoch zu niedrig, weil beispielsweise die Brennkraftmaschine deaktiviert ist, so ist die Temperatur des Warmluftstroms bei optimalem Wirkungsgrad der Heizeinrichtung zu hoch. Daher kann es vorgesehen sein, den Wirkungsgrad der Heizeinrichtung zu verringern, um die Temperatur des Warmluftstroms auf ein für den Katalysator erträgliches Maß abzusenken. Eine derartige Verschlechterung des Wirkungsgrads bedeutet jedoch, dass das Potential der Heizeinrichtung nicht ausgenutzt wird und zudem die Menge der erzeugten Schadstoffe größer ist als bei einem Betrieb mit optimalem Wirkungsgrad.

Aus dem Stand der Technik ist beispielsweise die Druckschrift DE 2010 060 136 A1 bekannt. Diese betrifft ein Verfahren zum Regeln der einem mit seinem Ausgang einen Abgasstrang einer Brennkraftmaschine in Strömungsrichtung des Abgases vor einem in den Abgasstrang eingeschalteten Reinigungsaggregat beaufschlagenden Brenner zugeführten Luftmenge, wobei die dem Brenner zugeführte Luft durch einen Verdichter gefördert wird. Die durch den Verdichter geförderte Luft wird durch eine Lavaldüse geleitet, bevor diese den Brenner beaufschlagt. Der Verdichter wird derart betrieben, dass der Druck eingangsseitig zu der Lavaldüse zumindest etwa dem 1,2-fachen des Druckes am Ausgang der Lavaldüse entspricht.

Der Stand der Technik zeigt weiterhin die Druckschrift EP 1 013 997 A2. Diese betrifft eine Brennkraftmaschine mit innerer Verbrennung mit einem Verbrennungsheizgerät, welches einen Abgasreinigungskatalysator aufweist, welcher in einer Abgasleitung der Brennkraftmaschine zur Reinigung schädlicher Gaskomponenten vorgesehen ist, welche in dem Abgas enthalten sind, und ein Verbrennungsheizgerät, welches eine Brennkammer aufweist, welche unabhängig von der Brennkraftmaschine ist, und einen Wärmetauscher für die Übertragung an ein wärmespeicherndes, mit dem Motor verbundenes Element durch das Rauchgas, welches in der Brennkammer verbrannt worden ist, aufweist.

Dabei ist eine erste Rauchgasausstoßvorrichtung vorgesehen, bei der das Rauchgas, welches den Wärmetauscher durchlaufen hat, aus der Brennkammer ausgestoßen wird. Zudem liegt eine zweite Rauchgasausstoßvorrichtung vor, bei der das Rauchgas, welches den Wärmetauscher noch nicht durchlaufen hat oder nur einen Teil des Wärmetauschers durchlaufen hat, aus der Brennkammer ausgestoßen wird. Schließlich verfügt die Brennkraftmaschine über Rauchgasdurchlaufsteuereinrichtungen, wobei zumindest eine der ersten Rauchgasausstoßvorrichtungen und der zweiten Rauchgasausstoßvorrichtung mit einem in Stromrichtung aufwärts gelegenen Bereich des Abgasreinigungskatalysators in der Abgasleitung verbunden ist und eine zweite Rauchgasleitung die zweite Rauchgasausstoßvorrichtung mit der Abgasleitung in Stromrichtung aufwärts des Abgasreinigungskatalysators verbindet.
Es ist Aufgabe der Erfindung, ein Verfahren zum Betreiben einer Antriebseinrichtung bereitzustellen, welches die eingangs genannten Nachteile nicht aufweist, sondern insbesondere in jedem Betriebszustand der Brennkraftmaschine ein zuverlässiges Heizen des Katalysators mittels der Heizeinrichtung bei gleichzeitig geringen Schadstoffemissionen ermöglicht.

Dies wird erfindungsgemäß mit einem Verfahren mit den Merkmalen des Anspruchs 1 erreicht. Dabei ist vorgesehen, dass der Warmluftstrom stromaufwärts des Katalysators zum Einstellen einer bestimmten Temperatur mit einem Kaltfrischluftstrom vermengt wird, wobei die Heizeinrichtung in einen Zylinderkopf der Brennkraftmaschine integriert ist. Es ist also nicht beziehungsweise nicht allein vorgesehen, die Temperatur des dem Katalysator zugeführten Fluids mithilfe des Abgases der Brennkraftmaschine einzustellen. Vielmehr soll der Warmluftstrom vor dem Durchströmen des Katalysators mit dem Kaltfrischluftstrom zusammengeführt werden. Zusätzlich kann es, insbesondere bei aktivierter Brennkraftmaschine, vorgesehen sein, dass auch das Abgas der Brennkraftmaschine stromaufwärts des Katalysators mit dem Warmluftstrom zusammengeführt wird.

Der Kaltfrischluftstrom besteht aus Frischluft, welche einer Außenumgebung der Antriebseinrichtung entnommen wird. Die Frischluft ist insbesondere chemisch unverändert, hat also in der Antriebseinrichtung nicht an einer chemischen Reaktion, beispielsweise einer Verbrennung oder dergleichen, teilgenommen. Die Frischluft des Kaltfrischluftstroms weist eine Temperatur auf, welche geringer ist als die Temperatur des Warmluftstroms. Durch das Auswählen eines geeigneten Kaltfrischluftmassenstroms kann die bestimmte Temperatur stromaufwärts des Katalysators eingestellt werden. Die bestimmte Temperatur entspricht dabei beispielsweise der Betriebstemperatur des Katalysators, ab welcher dieser eine vollständige katalytische Reaktion ermöglicht. Sie kann alternativ auch höher oder niedriger sein, liegt jedoch unter der maximal zulässigen Temperatur des Katalysators. Der Kaltfrischluftstrom wird an der Heizeinrichtung vorbeigeführt, durchläuft diese also nicht.

Durch das Vermengen des Warmluftstroms mit dem Kaltfrischluftstrom wird der Massenstrom des den Katalysator durchströmenden Fluids vergrößert. Zugleich wird die Temperatur auf ein für den Katalysator verträgliches Maß eingestellt. Bedingt durch die Vergrößerung des Massenstroms wird der Katalysator gleichmäßiger und schneller aufgeheizt als dies allein durch den Warmluftstrom möglich wäre. Zudem kann, wie bereits vorstehend ausgeführt, die Heizeinrichtung mit optimalem Wirkungsgrad und/oder mit geringen Schadstoffemissionen betrieben werden.

Eine weitere Ausgestaltung der Erfindung sieht vor, dass der Kaltfrischluftstrom durch wenigstens einen deaktivierten oder in einem Schubbetrieb betriebenen Zylinder der Brennkraftmaschine geführt wird. Der Kaltfrischluftstrom durchströmt also den Zylinder der Brennkraftmaschine, bevor er mit dem Warmluftstrom vermengt und nachfolgend dem Katalysator zugeführt wird. Zu diesem Zweck werden die Ventile des Zylinders, insbesondere also wenigstens ein Einlassventil und zumindest ein Auslassventil, entsprechend eingestellt. Beispielsweise sind das wenigstens eine Einlassventil sowie das wenigstens eine Auslassventil gleichzeitig geöffnet, sodass der Kaltfrischluftstrom den Zylinder ungehindert durchströmen kann.

Der Zylinder kann dabei deaktiviert sein oder in einem Schubbetrieb betrieben werden. In beiden Fällen findet in dem Zylinder keine Verbrennung von Kraftstoff statt, sodass der Kaltfrischluftstrom bei dem Durchströmen des Zylinders chemisch nicht verändert wird. Im Falle des deaktivierten Zylinders ist vorzugsweise die gesamte Brennkraftmaschine deaktiviert. Ist die Brennkraftmaschine aktiviert, wird sie also mit Kraftstoff versorgt beziehungsweise wird eine Verbrennung von Kraftstoff in der Brennkraftmaschine durchgeführt, so ist dies für den wenigstens einen Zylinder, durch welchen der Kaltfrischluftstrom geführt wird, nicht der Fall. Zu diesem Zweck wird er beispielsweise in dem Schubbetrieb betrieben, der ihm zugeordnete Kolben also lediglich von wenigstens einem weiteren, aktivierten Zylinder und/oder einem extern bereitgestellten Drehmoment bewegt.

Eine weitere Ausgestaltung der Erfindung sieht vor, dass ein der Heizeinrichtung zugeführter Kaltluftstrom stromaufwärts der Brennkraftmaschine an einer Entnahmestelle von dem Kaltfrischluftstrom abgezweigt wird. Bis zu der Entnahmestelle werden der Kaltluftstrom und der Kaltfrischluftstrom gemeinsam geführt, beispielsweise in einer gemeinsamen Leitung. Zusammen bilden der Kaltluftstrom und der Kaltfrischluftstrom einen Frischluftstrom, welcher der Außenumgebung der Antriebseinrichtung entnommen wird. An der Entnahmestelle wird der Frischluftstrom in den Kaltluftstrom und den Kaltfrischluftstrom aufgeteilt. Der Kaltluftstrom wird der Heizeinrichtung zugeführt und mittels dieser erwärmt, sodass der Kaltluftstrom in den Warmluftstrom übergeht. Der Kaltfrischluftstrom wird dagegen, wie bereits ausgeführt, um die Heizeinrichtung herumgeführt und stromabwärts der Heizeinrichtung, jedoch stromaufwärts des Katalysators, wieder mit dem aus dem Kaltluftstrom hervorgegangenen Warmluftstrom zusammengeführt. Der Kaltfrischluftstrom durchläuft dabei beispielsweise den wenigstens einen Zylinder der Brennkraftmaschine.

Eine Weiterbildung der Erfindung sieht vor, dass ein den Kaltluftstrom und den Kaltfrischluftstrom bildender Frischluftstrom stromaufwärts der Entnahmestelle mittels eines Verdichters verdichtet wird. Es wurde bereits darauf eingegangen, dass der Kaltluftstrom und der Kaltfrischluftstrom stromaufwärts der Entnahmestelle gemeinsam in Form des Frischluftstroms geführt und erst an der Entnahmestelle getrennt werden. Zusätzlich ist es nun vorgesehen, dass dieser Frischluftstrom mittels des Verdichters verdichtet wird. Der Frischluftstrom soll also aus der Außenumgebung der Antriebseinrichtung angesaugt, mithilfe des Verdichters auf ein höheres Druckniveau gebracht werden und anschließend an der Entnahmestelle in den Kaltluftstrom und den Kaltfrischluftstrom aufgeteilt werden. Der Verdichter liegt beispielsweise in Form eines elektrisch betriebenen Verdichters oder eines Laders, insbesondere eines Kompressors, beispielsweise eines elektrisch betriebenen oder unterstützten Kompressors, vor.

In einer besonders vorteilhaften Ausgestaltung der Erfindung ist vorgesehen, dass zumindest ein Einlassventil und zumindest ein Auslassventil des Zylinders derart betrieben werden, dass der Kaltfrischluftstrom in Richtung des Katalysators gefördert wird. Dies ist besonders bevorzugt dann der Fall, wenn der Zylinder, durch welchen der Kaltfrischluftstrom geführt wird, in dem Schubbetrieb betrieben wird. In diesem Fall wird der Kolben des Zylinders von wenigstens einem weiteren Zylinder der Brennkraftmaschine und/oder dem extern bereitgestellten Drehmoment periodisch verlagert. Durch entsprechendes Einstellen des Einlassventils und des Auslassventils kann mithin eine Pumpwirkung erzielt werden. Mithilfe dieser Pumpwirkung kann der Massenstrom des Kaltfrischluftstroms vergrößert und/oder gezielt eingestellt werden. Um eine möglichst kontinuierliche Pumpwirkung zu erzielen, ist es selbstverständlich vorteilhaft, wenn der Kaltfrischluftstrom parallel durch mehrere Zylinder geführt wird, die im Schubbetrieb betrieben werden.

Eine Weiterbildung der Erfindung sieht vor, dass als Heizeinrichtung ein mit flüssigem oder gasförmigem Kraftstoff betriebener Brenner verwendet wird. Ein derartiger Brenner eignet sich insbesondere für das hier vorgesehene mittelbare Beheizen des Katalysators. Der Brenner wird vorzugsweise mit flüssigem und/oder gasförmigem Kraftstoff betrieben. Der Kraftstoff wird beispielsweise durch eine Brennstoffzuführleitung in eine Gemischbildungskammer des Brenners eingebracht. In die Gemischbildungskammer kann zusätzlich eine Luftzuführleitung einmünden. Entsprechend kann der Gemischbildungskammer sowohl Luft als auch Brennstoff zugeführt und nachfolgend zum Beheizen des Katalysators verbrannt werden. Auf diese Weise kann der Katalysator sehr schnell auf die gewünschte Betriebstemperatur gebracht werden, sodass eine Reinigung des Abgases mit hoher Effizienz durchführbar ist. Der Vorteil des Brenners liegt in der sehr hohen Energiedichte, einer variablen Einbauposition und einer einfachen Bauweise. Besonders bevorzugt ist die Heizeinrichtung entsprechend der in der Patentanmeldung DE 10 2012 016 673 beschriebenen Heizvorrichtung ausgeführt. Die genannte Patentanmeldung ist für eine bevorzugte Ausführungsform der Erfindung in vollem Umfang durch Referenz einbezogen. Insbesondere kann die Antriebseinrichtung zusätzlich die Merkmale eines oder mehrerer der Ansprüche der genannten Patentanmeldung zusätzlich oder alternativ zu den bereits vorhandenen aufweisen.

Weiterhin kann vorgesehen sein, dass als Verdichter ein elektrisch angetriebener oder elektrisch unterstützter Verdichter verwendet wird. Der Verdichter kann also ausschließlich elektrisch angetrieben sein oder elektrisch unterstützt werden. In letzterem Fall ist er beispielsweise Bestandteil eines Laders, welcher als Kompressor oder als Abgasturbolader ausgeführt sein kann.

Schließlich kann vorgesehen sein, dass der Verdichter Bestandteil eines Abgasturboladers ist. Hierauf wurde bereits vorstehend hingewiesen. Der Abgasturbolader ist besonders bevorzugt elektrisch unterstützt, sodass auch bei deaktivierter Brennkraftmaschine der Verdichter zum Verdichten des Frischluftstroms verwendet werden kann, indem er rein elektrisch angetrieben wird. Der Abgasturbolader kann jedoch auch elektrisch unterstützt werden, falls der von der Brennkraftmaschine erzeugte und ihm zugeführte Abgasmassenstrom nicht ausreicht, um den Frischluftstrom ausreichend zu verdichten.

Die Erfindung betrifft weiterhin eine Antriebseinrichtung, insbesondere zur Durchführung des vorstehend beschriebenen Verfahrens, mit einer Brennkraftmaschine und mit einer an die Brennkraftmaschine angeschlossenen Abgasanlage, die wenigstens einen Katalysator aufweist, dem zum Aufheizen in wenigstens einem Betriebszustand der Brennkraftmaschine ein mittels einer Heizeinrichtung erwärmter Warmluftstrom zuführbar ist. Dabei ist vorgesehen, dass die Antriebseinrichtung dazu ausgebildet ist, den Warmluftstrom stromaufwärts des Katalysators zum Einstellen einer bestimmten Temperatur mit einem Kaltfrischluftstrom zu vermengen, wobei die Heizeinrichtung in einen Zylinderkopf der Brennkraftmaschine integriert ist. Auf die Vorteile einer derartigen Vorgehensweise beziehungsweise eines derartigen Aufbaus der Antriebseinrichtung wurde bereits eingegangen. Die Antriebseinrichtung sowie das mit ihr umgesetzte Verfahren können gemäß den vorstehenden Ausführungen weitergebildet sein, sodass insoweit auf diese verwiesen wird.

Es ist vorgesehen, dass die Heizeinrichtung in einem Zylinderkopf der Brennkraftmaschine integriert ist. Bei einer derartigen Anordnung ist eine besonders kompakte beziehungsweise platzsparende Anordnung der Heizvorrichtung möglich. Dies ist insbesondere dann der Fall, wenn die Gemischbildungskammer der Heizeinrichtung unmittelbar in dem Zylinderkopf der Brennkraftmaschine ausgebildet ist, beispielsweise durch Gießen. In diesem Zusammenhang wird erneut auf die Patentanmeldung DE 10 2012 016 673 hingewiesen, deren Merkmale ergänzend zu den hier beschriebenen zur vorteilhaften Weiterbildung der Erfindung herangezogen werden können.

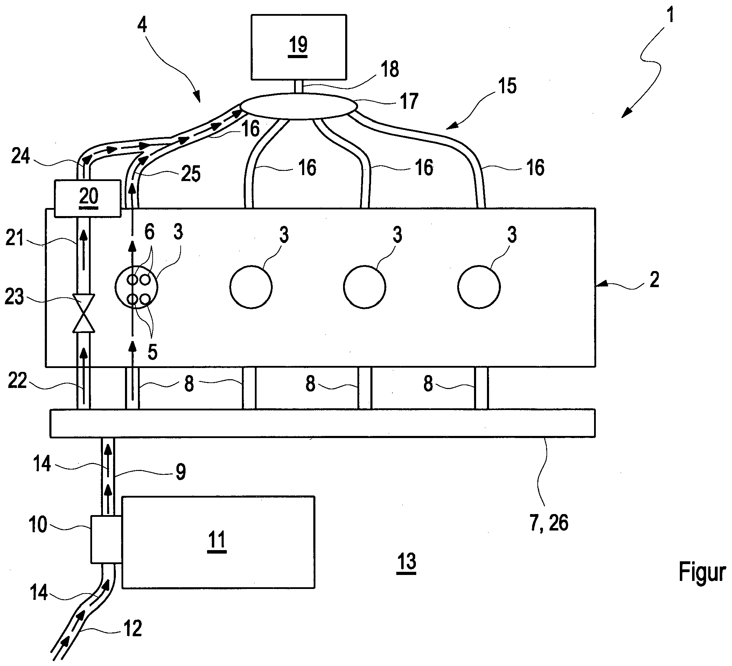

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung mit einer Brennkraftmaschine sowie einer Abgasanlage.

Die Figur zeigt eine schematische Darstellung einer Antriebseinrichtung 1 mit einer Brennkraftmaschine 2, die über mehrere Zylinder 3 verfügt, sowie mit einer Abgasanlage 4. Jeder der Zylinder 3 verfügt über wenigstens ein Einlassventil 5 sowie wenigstens ein Auslassventil 6. Die Einlassventile 5 der Zylinder 3 sind an einen Luftverteiler 7 angeschlossen, welcher bevorzugt als gemeinsamer Luftverteiler ausgebildet ist. Zu diesem Zweck sind Anschlussleitungen 8 vorgesehen. Der Luftverteiler 7 ist über eine Leitung 9 strömungstechnisch an einen Verdichter 10 angeschlossen, der beispielsweise mittels eines Elektromotors 11 antreibbar ist. Zusätzlich oder alternativ kann der Verdichter 10 auch Bestandteil eines Laders, insbesondere eines Abgasturboladers oder eines Kompressors, sein. Der Verdichter 10 ist auf der dem Luftverteiler 7 abgewandten Seite über eine Leitung 12 an eine Außenumgebung 13 der Antriebseinrichtung 1 strömungstechnisch angeschlossen. Mithilfe des Verdichters 10 kann also Frischluft aus der Außenumgebung 13 angesaugt und in Form eines Frischluftstroms 14 dem Luftverteiler 7 zugeführt werden. Strömungstechnisch zwischen dem Verdichter 10 und der Außenumgebung 13 ist bevorzugt ein Luftfilter angeordnet.

Die Abgasanlage 4 verfügt über einen Abgaskrümmer 15, welcher für jeden Zylinder 3 wenigstens eine Abgasleitung 16 aufweist. Diese ist jeweils an das wenigstens eine Auslassventil 6 des jeweiligen Zylinders 3 strömungstechnisch angeschlossen und dient insbesondere dem Abführen von Abgas aus der Brennkraftmaschine 2. Die Abgasleitungen 16 werden einem Abgasturbolader 17 beziehungsweise einer Turbine des Abgasturboladers 17 zugeführt. Der Abgasturbolader 17 beziehungsweise die Turbine ist zu diesem Zweck beispielsweise mehrflutig ausgeführt. Alternativ kann es jedoch auch vorgesehen sein, dass wenigstens zwei der Abgasleitungen 16 stromaufwärts des Abgasturboladers 17 zusammengeführt und gemeinsam dem Abgasturbolader 17 zugeführt sind. Bevorzugt werden alle Abgasleitungen 16 stromaufwärts des Abgasturboladers 17 zusammengeführt. Die Turbine des Abgasturboladers 17 kann dem Antreiben des Verdichters 10 dienen, wobei in diesem Fall der Verdichter 10 Bestandteil des Abgasturboladers 17 ist. Auf der den Abgasleitungen 16 abgewandten Seite des Abgasturboladers 17 ist eine weitere Leitung 18 vorgesehen, die zu einem Katalysator 19 führt. Durch die Abgasleitungen 16 strömendes Fluid, insbesondere Abgas, durchströmt also den Abgasturbolader 17 und nachfolgend den Katalysator 19. Stromabwärts des Katalysators 19 wird das Fluid wiederum der Außenumgebung 13 zugeführt. Es soll darauf hingewiesen werden, dass der Abgasturbolader 17 optional ist. Die Abgasleitungen 16 können alternativ getrennt oder bereits zusammengeführt an den Katalysator 19 angeschlossen sein.

Zum Aufheizen des Katalysators 19 in wenigstens einem Betriebszustand der Brennkraftmaschine 2 ist eine Heizeinrichtung 20 vorgesehen, die beispielsweise in Form eines Brenners vorliegt, welcher mit flüssigem oder gasförmigem Kraftstoff betrieben wird. Die Heizeinrichtung 20 ist bevorzugt in die Brennkraftmaschine 2, insbesondere in einem Zylinderkopf der Brennkraftmaschine 2, integriert. Sie ist über eine Leitung 21 an dem Luftverteiler 7 angeschlossen. Durch die Leitung 21 kann der Heizeinrichtung 20 ein Kaltluftstrom 22 zugeführt werden, wobei ein Durchsatz des Kaltluftstrom 22, also die Masse beziehungsweise das Volumen pro Zeiteinheit, vorzugsweise mittels eines Ventils 23 einstellbar ist. Das Ventil 23 dient als Querschnittsverstellelement, um den Durchströmungsquerschnitt der Leitung 21 einzustellen. Selbstverständlich kann das Ventil 23 auch in der Heizeinrichtung 20 integriert sein. In der Heizeinrichtung 20 wird der Kaltluftstrom 22 aufgeheizt und nachfolgend in Form eines Warmluftstroms 24 in Richtung des Katalysators 19 ausgebracht. Der Warmluftstrom 24 weist bevorzugt eine hohe Temperatur auf, welche beispielsweise höher ist als eine maximal zulässige Temperatur des Katalysators 19.

Aus diesem Grund ist es notwendig, die Temperatur des dem Katalysator 19 zugeführten Fluids zu reduzieren. Zu diesem Zweck wird der Warmluftstrom 24 stromaufwärts des Katalysators 19 mit Abgas der Brennkraftmaschine 2 und/oder einem Kaltfrischluftstrom 25 zum Einstellen einer bestimmten Temperatur vermengt. Der Warmluftstrom 24 wird dazu beispielsweise einer der Abgasleitungen 16 zugeführt oder alternativ einer gemeinsamen Abgasleitung, in welcher die Abgasleitungen 16, insbesondere alle Abgasleitungen 16, zusammengeführt sind. Der Kaltfrischluftstrom 25 wird ebenso wie der Kaltluftstrom 22 dem Luftverteiler 7 entnommen. Insbesondere wird der Frischluftstrom 14 in dem Luftverteiler 7, welcher insoweit eine Entnahmestelle 26 darstellt, in den Kaltluftstrom 22 und den Kaltfrischluftstrom 25 aufgeteilt. Der Kaltluftstrom 22 wird mittels der Heizeinrichtung 20 aufgeheizt, wobei er beispielsweise Teil einer chemischen Reaktion ist. Insbesondere wird Kraftstoff mit dem Kaltluftstrom 22 vermengt und verbrannt. Entsprechend liegt stromabwärts der Heizeinrichtung 20 der Warmluftstrom 24 vor, der aus dem Kaltluftstrom 22 hervorgeht.

Der Warmluftstrom 24 wird mit dem Kaltfrischluftstrom 25 stromaufwärts des Katalysators 19 zusammengeführt. Besonders bevorzugt wird dabei, wie dargestellt, der Kaltfrischluftstrom 25 durch wenigstens einen der Zylinder 3 geführt, insbesondere ohne dass er chemisch verändert wird. Der entsprechende Zylinder 3 ist also deaktiviert, sodass in ihm keine Verbrennung abläuft. Beispielsweise wird der Zylinder 3 in einem Schubbetrieb betrieben. Dabei werden das wenigstens eine Einlassventil 5 sowie das wenigstens eine Auslassventil 6 des entsprechenden Zylinders 3 derart betrieben, dass der Kaltfrischluftstrom 25 in Richtung des Katalysators 19 gefördert wird. Das beschriebene Verfahren wird bevorzugt bei deaktivierter Brennkraftmaschine 2 durchgeführt. Es kann jedoch auch bei einem lediglich teilweise Deaktivieren der Brennkraftmaschine 2 vorgenommen werden, wobei beispielsweise wenigstens einer der Zylinder 3 aktiv ist, in ihm also eine Verbrennung von Kraftstoff vorgenommen wird. Lediglich der wenigstens eine Zylinder 3, durch welchen der Kaltfrischluftstrom 25 geführt wird, ist deaktiviert beziehungsweise wird in dem Schubbetrieb betrieben.

Mit einer derartigen Antriebseinrichtung 1 kann auch bei deaktivierter Brennkraftmaschine 2 ein hoher Massenstrom eines temperierten Fluids dem Katalysator 19 zu dessen Erwärmen zugeführt werden. Die Temperatur des dem Katalysator 19 zugeführten Fluids entspricht vorzugsweise zumindest seiner Betriebstemperatur, ist jedoch geringer als die maximal zulässige Temperatur, ab welcher Beschädigungen des Katalysators 19 auftreten können. Wie bereits vorstehend erläutert, wird dabei lediglich ein Teil des Frischluftstroms 14 in Form des Kaltluftstroms 22 aufgeheizt und nachfolgend als Warmluftstrom 24 dem Katalysator 19 zugeführt. Der andere Teil des Frischluftstroms 14 wird als Kaltfrischluftstrom 25 um die Heizeinrichtung 20 herumgeführt, bevorzugt durch den wenigstens einen Zylinder 3 der Brennkraftmaschine 2. Entsprechend ist die Temperatur des Kaltfrischluftstroms 25 geringer als die des Warmluftstroms 24. Durch eine geeignete Wahl der Massenströme des Warmluftstroms 24 und des Kaltfrischluftstroms 25 kann die Temperatur des dem Katalysator 19 zugeführten Fluids auf einen gewünschten Wert eingestellt werden. Insoweit ist es möglich, die Heizeinrichtung 20 stets bei optimalem Wirkungsgrad zu betreiben, ohne eine Beschädigung des Katalysators 19 bei dessen Aufheizen befürchten zu müssen.

## Patentansprüche

1. Verfahren zum Betreiben einer Antriebseinrichtung (1) mit einer Brennkraftmaschine (2) und mit einer an die Brennkraftmaschine (2) angeschlossenen Abgasanlage (4), die wenigstens einen Katalysator (19) aufweist, dem zum Aufheizen in wenigstens einem Betriebszustand der Brennkraftmaschine (2) ein mittels einer Heizeinrichtung (20) erwärmter Warmluftstrom (24) zugeführt wird, **dadurch gekennzeichnet, dass** der Warmluftstrom (24) stromaufwärts des Katalysators (19) zum Einstellen einer bestimmten Temperatur mit einem Kaltfrischluftstrom (25) vermengt wird, wobei die Heizeinrichtung (20) in einen Zylinderkopf der Brennkraftmaschine (2) integriert ist.

2. Verfahren nach Anspruch 1, **dadurch gekennzeichnet, dass** der Kaltfrischluftstrom (25) durch wenigstens einen deaktivierten oder in einem Schubbetrieb betriebenen Zylinder (3) der Brennkraftmaschine (2) geführt wird.

3. Verfahren nach einem der vorhergehenden Ansprüche, **dadurch gekennzeichnet, dass** ein der Heizeinrichtung (20) zugeführter Kaltluftstrom (22) stromaufwärts der Brennkraftmaschine (2) an einer Entnahmestelle (26) von dem Kaltfrischluftstrom (25) abgezweigt wird.

4. Verfahren nach einem der vorhergehenden Ansprüche, **dadurch gekennzeichnet, dass** ein den Kaltluftstrom (22) und den Kaltfrischluftstrom (25) bildender Frischluftstrom (14) stromaufwärts der Entnahmestelle (26) mittels eines Verdichters (10) verdichtet wird.

5. Verfahren nach einem der vorhergehenden Ansprüche, **dadurch gekennzeichnet, dass** zumindest ein Einlassventil (5) und zumindest ein Auslassventil (6) des Zylinders (3) derart betrieben werden, dass der Kaltfrischluftstrom (25) in Richtung des Katalysators (19) gefördert wird.

6. Verfahren nach einem der vorhergehenden Ansprüche, **dadurch gekennzeichnet, dass** als Heizeinrichtung (20) ein mit flüssigem oder gasförmigem Kraftstoff betriebener Brenner verwendet wird.

7. Verfahren nach einem der vorhergehenden Ansprüche, **dadurch gekennzeichnet, dass** als Verdichter (10) ein elektrisch angetriebener oder elektrisch unterstützter Verdichter verwendet wird.

8. Verfahren nach einem der vorhergehenden Ansprüche, **dadurch gekennzeichnet, dass** der Verdichter (10) Bestandteil eines Abgasturboladers (17) ist.

9. Antriebseinrichtung (1), insbesondere zur Durchführung des Verfahrens nach einem oder mehreren der vorhergehenden Ansprüche, mit einer Brennkraftmaschine (2) und mit einer an die Brennkraftmaschine (2) angeschlossenen Abgasanlage (4), die wenigstens einen Katalysator (19) aufweist, dem zum Aufheizen in wenigstens einem Betriebszustand der Brennkraftmaschine (2) ein mittels einer Heizeinrichtung (20) erwärmter Warmluftstrom (24) zuführbar ist, **dadurch gekennzeichnet, dass** die Antriebseinrichtung (1) dazu ausgebildet ist, den Warmluftstrom (24) stromaufwärts des Katalysators (19) zum Einstellen einer bestimmten Temperatur mit einem Kaltfrischluftstrom (25) zu vermengen, wobei die Heizeinrichtung (20) in einen Zylinderkopf der Brennkraftmaschine (2) integriert ist.

## Claims

1. Method for operating a drive device (1) comprising an internal combustion engine (2) and comprising an exhaust system (4) connected to the internal combustion engine (2) and having at least one catalytic converter (19) to which a warm air stream (24) warmed by a heating device (20) is fed, for heating up in at least one operating condition of the internal combustion engine (2), **characterised in that** the warm air stream (24) is mixed with a cold fresh air stream (25) upstream of the catalytic convertor (19) to set a certain temperature, wherein the heating device (20) is integrated in a cylinder head of the internal combustion engine (2).

2. Method according to claim 1, **characterised in that** the cold fresh air stream (25) is fed through at least one cylinder (3) of the internal combustion engine (2), which is deactivated or operated in overrun.

3. Method according to one of the preceding claims, **characterised in that** a cold air stream (22) fed to the heating device (20) is branched off from the cold fresh air stream (25) at an extraction location (26) upstream of the internal combustion engine (2).

4. Method according to one of the preceding claims, **characterised in that** a fresh air stream (14) forming the cold air stream (22) and the cold fresh air stream (25) is compressed upstream of the extraction location (26) by means of a compressor (10).

5. Method according to one of the preceding claims, **characterised in that** at least one inlet valve (5) and at least one outlet valve (6) of the cylinder (3) is driven in such a way that the cold fresh air stream (25) is conveyed in the direction of the catalytic convertor (19).

6. Method according to one of the preceding claims, **characterised in that** a burner fired by liquid or gaseous fuel is used as heating device (20).

7. Method according to one of the preceding claims, **characterised in that** an electrically driven or electrically assisted compressor is used as compressor (10).

8. Method according to one of the preceding claims, **characterised in that** the compressor (10) is a component of an exhaust-driven turbocharger (17).

9. Drive device (1), in particular for implementation of the method according to one or more of the preceding claims, comprising an internal combustion engine (2) and comprising an exhaust system (4) connected to the internal combustion engine (2) and having at least one catalytic converter (19) to which a warm air stream (24) warmed by a heating device (20) is fed, for heating up in at least one operating condition of the internal combustion engine (2), **characterised in that** the drive device (1) is configured to mix the warm air stream (24) with a cold fresh air stream (25) upstream of the catalytic convertor (19) to set a certain temperature, wherein the heating device (20) is integrated in a cylinder head of the internal combustion engine (2).

## Revendications

1. Procédé servant à faire fonctionner un dispositif d'entraînement (1) comprenant un moteur à combustion interne (2) et un système d'échappement (4) raccordé au moteur à combustion interne (2), lequel présente au moins un catalyseur (19), auquel est acheminé, pour le chauffage dans au moins un état de fonctionnement du moteur à combustion interne (2), un courant d'air chaud (24) chauffé au moyen d'un dispositif de chauffage (20), **caractérisé en ce que** le courant d'air chaud (24) est mélangé, en amont du catalyseur (19), afin de régler une température déterminée, à un courant d'air frais froid (25), dans lequel le dispositif de chauffage (20) est intégré dans une tête de cylindre du moteur à combustion interne (2).

2. Procédé selon la revendication 1, **caractérisé en ce que** le courant d'air frais froid (25) est guidé par au moins un cylindre (3), désactivé ou fonctionnant dans un régime de poussée, du moteur à combustion interne (2).

3. Procédé selon l'une quelconque des revendications précédentes, **caractérisé en ce qu'**un courant d'air froid (22) acheminé au dispositif de chauffage (20) est dérivé du courant d'air frais froid (25) en amont du moteur à combustion interne (2) en un point de prélèvement (26).

4. Procédé selon l'une quelconque des revendications précédentes, **caractérisé en ce qu'**un courant d'air frais (14) formant le courant d'air froid (22) et le courant d'air frais froid (25) est comprimé au moyen d'un compresseur (10) en amont du point de prélèvement (26).

5. Procédé selon l'une quelconque des revendications précédentes, **caractérisé en ce qu'**au moins une vanne d'entrée (5) et au moins une vanne de sortie (6) du cylindre (3) fonctionnent de telle manière que le courant d'air frais froid (25) soit refoulé en direction du catalyseur (19).

6. Procédé selon l'une quelconque des revendications précédentes, **caractérisé en ce qu'**un brûleur fonctionnant avec un carburant liquide ou gazeux est utilisé en tant que dispositif de chauffage (20).

7. Procédé selon l'une quelconque des revendications précédentes, **caractérisé en ce qu'**un compresseur entraîné électriquement ou assisté électriquement est utilisé en tant que compresseur (10).

8. Procédé selon l'une quelconque des revendications précédentes, **caractérisé en ce que** le compresseur (10) fait partie d'un turbocompresseur à gaz d'échappement (17).

9. Dispositif d'entraînement (1), en particulier servant à mettre en oeuvre le procédé selon l'une quelconque ou plusieurs des revendications précédentes, comprenant un moteur à combustion interne (2) et un système d'échappement (4) raccordé au moteur à combustion interne (2), lequel présente au moins un catalyseur (19), auquel peut être acheminé un courant d'air chaud (24) chauffé au moyen d'un dispositif de chauffage (20) pour le chauffage dans au moins un état de fonctionnement du moteur à combustion interne (2), **caractérisé en ce que** le dispositif d'entraînement (1) est réalisé pour mélanger le courant d'air chaud (24) à un courant d'air frais froid (25) en amont du catalyseur (19) afin de régler une température déterminée, dans lequel le dispositif de chauffage (20) est intégré dans une tête de cylindre du moteur à combustion interne (2).
